# EUROPÄISCHE PATENTSCHRIFT

(11) **EP 3 188 942 B1**
(45) Veröffentlichungstag und Bekanntmachung des Hinweises auf die Patenterteilung: **05.12.2018**
(21) Anmeldenummer: 15762515.3
(22) Anmeldetag: 26.08.2015
(51) Int. Cl.: B60T 8/171, G01P 3/48, G01P 3/489

(54) **FEHLERMELDUNG MIT PULSLEVEL UNTERHALB ENERGIEVERSORGUNGSLEVEL**
ERROR REPORTING AT A PULSE LEVEL LYING BELOW THE POWER SUPPLY LEVEL
MESSAGE D'ERREUR COMPRENANT UN NIVEAU D'IMPULSION INFÉRIEUR AU NIVEAU D'ALIMENTATION EN ÉNERGIE

(30) Priorität: 05.09.2014 DE 102014217834
(43) Veröffentlichungstag der Anmeldung: 12.07.2017
(73) Patentinhaber: Continental Teves AG & Co. OHG, 60488 Frankfurt am Main (DE)
(72) Erfinder: ENDRES, Ralf, 64521 Groß-Gerau (DE)
(86) Internationale Anmeldenummer: PCT/EP2015/069570
(87) Internationale Veröffentlichungsnummer: WO 2016/034477

(56) Entgegenhaltungen:
- WO-A1-2007/017523
- DE-A1- 10 146 949
- DE-A1- 19 812 486
- DE-A1- 19 833 116

## Beschreibung

Die Erfindung betrifft ein Verfahren zum Senden einer Fehlerinformation in einem einen Sensor mit elektrischer Energie versorgenden Signal, beispielsweise aus einer Stromschnittstelle, und einen Sensor zur Durchführung des Verfahrens. Aus der DE 10 2011 080 789 A1 ist ein Fahrzeug bekannt, in dem Raddrehzahlsensoren zur Erfassung der Raddrehzahl der einzelnen Räder verbaut sind. Diese Raddrehzahlsensoren sind aktive Raddrehzahlsensoren und übertragen ihre Messdaten in Form von Raddrehzahlen über ein Kabel als Übertragungsstrecke an eine Auswerteeinrichtung.
Druckschrift DE 198 33 116 A1 schlägt einen elektrischen Geber mit einem Sensorelement zur Erfassung einer Bewegung vor, bei welchem eine Komponente abgeschaltet werden kann zur Reduzierung des Energieverbrauchs während eines Fahrzeugstillstands.
Offenlegungsschrift 198 12 486 A1 offenbart eine Auswerteschaltung für elektronische Signalgeber, bei welcher ein Sensorfehler in einer Empfangseinheit erkannt wird, worauf der fehlerhafte Sensor abgekoppelt wird.
Es ist Aufgabe der Erfindung, die Übertragung der Messdaten zu verbessern.
Die Aufgabe wird durch die Merkmale der unabhängigen Ansprüche gelöst. Bevorzugte Weiterbildungen sind Gegenstand der abhängigen Ansprüche.
Unter einer übergeordneten Empfangseinrichtung wird vorzugsweise eine externe Empfangseinrichtung verstanden, insbesondere eine elektronische Kontrolleinheit bzw. ein elektronisches Steuergerät eines Kraftfahrzeugsystems bzw. Kraftfahrzeugregelungssystems, wie beispielsweise eines Kraftfahrzeugbremsensystems.

Gemäß einem Aspekt der Erfindung umfasst ein Verfahren zum Senden einer einen Fehler in einem Sensor beschreibenden Fehlerinformation in einem zwischen dem Sensor und einer übergeordneten Empfangseinrichtung ausgetauschten Signal, das mit einem Mindestpegel zur elektrischen Energieversorgung des Sensors sowie zum Tragen von Messinformationen eingerichtet ist die Schritte:
- Erkennen des zu versendenden Fehlers im Sensor,
- Abschalten einer elektrische Energie aufnehmenden Komponente des Sensors, und
- Senden des Fehlers mit einem Fehlerpegel unterhalb des-Mindestpegels.

Dem angegebenen Verfahren liegt die Überlegung zugrunde, dass zur Einhaltung hoher Sicherheitsstandards fehlerhafte Messinformationen und Fehler in der sensorinternen Signalverarbeitung zu erkennen und entsprechend bei ihrer Verarbeitung in einer übergeordneten Empfangseinrichtung zu berücksichtigen sind. Die Erkennung der fehlerhaften Messinformationen oder des Fehlers in der sensorinternen Signalverarbeitung könnte in dem Sensor geschehen, der die Messinformation erfasst und an die übergeordnete Empfangseinrichtung sendet. Hier stellt sich jedoch das Problem, dass aus Kostengründen in der Regel Zweidrahtleitungen verwendet werden, die sowohl die elektrische Energieversorgung des Sensors als auch den Austausch der Messinformationen übernehmen. Um die den Fehler beschreibende Fehlerinformation ebenfalls in dem Signal aufnehmen zu können müssten für das Fehlersignal Signalzustände außerhalb des normalen Nutzbereich definiert werden, die entweder eine nicht hinnehmbare Leistungsaufnahme mit sich bringen würden, oder die aufgrund einer bestimmten Grundleistungsaufnahme der Funktionsblöcke im Normalbetrieb des Sensors nicht erreicht werden können. Der Mindestpegel definiert diese Grundleistungsaufnahme und stellt daher ein Grundaufnahmelevel beziehungsweise ein Energieversorgungslevel für die elektrische Energieversorgung des Sensors dar. Ist der Sensor an eine Stromschnittstelle angeschlossen, dann der Mindestpegel beispielsweise als standardisierter Normalstrompegel definiert sein.

Hier greift das angegebene Verfahren mit der Überlegung an, dass im Fehlerfall des Sensors ohnehin keine verlässlichen Messinformationen mehr erfasst werden können, so dass diese aufgrund der fehlenden Verwertbarkeit durch das Empfangsgerät eigentlich nicht mehr übertragen werden müssen. Aus diesem Grunde brauchen bestimmte elektronische Komponenten im Fehlerzustand des Sensors eigentlich auch gar nicht betrieben werden und sind daher abschaltbar. Auf diese Weise sinkt dann die Leistungsaufnahme des Sensors, so dass die elektrische Energieversorgung des Sensors auch dann gesichert, wenn das Signal die Fehlerinformation mit Signalzuständen und damit mit Fehlerpegeln überträgt, die im Normalbetriebsfall des Sensors nicht zu erreichen wäre.

Durch das Abschalten wenigstens einer elektrische Energie aufnehmenden Komponente des Sensors im Fehlerfall können Fehler beschreibende Fehlerinformationen an die Empfangseinrichtung versendet werden, die unterscheidbar von den Messinformationen sind, so dass die Empfangseinrichtung dann entsprechend auf den Fehler des Sensors reagieren kann. Die elektrische Energie aufnehmende Komponente des Sensors kann dabei beliebig gewählt werden, und beispielsweise Teile einer Signalverarbeitungsschaltung zum Eintragen der Messinformationen in das Signal umfassen.

In einer Weiterbildung des angegebenen Verfahrens wird der Fehler in einem Puls gesendet, der über eine vorbestimmte zeitliche Länge auf dem Fehlerpegel gehalten wird. Durch das Halten des Pulses auf dem Fehlerpegel kann die Empfangseinrichtung diesen eindeutig als Fehlerinformation definieren und damit von gegebenenfalls auftretenden Signalschwankungen unterscheiden.

In einer zusätzlichen Weiterbildung des angegebenen Verfahrens kann die Messinformation in dem Signal mit Messpulsen zwischen dem Mindestpegel und einem zweiten oberhalb des Mindestpegels liegenden Messpulspegels beschrieben werden. Auf diese Weise lassen sich beispielsweise zeitabhängige Messinformationen wie Drehzahlen aus einem Drehzahlsensor in besonders robuster Weise übertragen. Je höher die Drehzahl ist, desto mehr Messpulse treten hier über einen vorbestimmten Referenzzeitraum auf. Die Erzeugung der Messpulse basierend auf der Drehzahl kann dabei beliebig erfolgen, und ist nicht auf ein bestimmtes Messprinzip eingeschränkt.

In einer besonderen Weiterbildung des angegebenen Verfahrens wird das Senden der Messpulse unterdrückt, wenn der zu versendende Fehler im Sensor erkannt wurde. Eine die elektrische Energie aufnehmende Komponente des Sensors, die die Messpulse erzeugt, kann dann entsprechend abgeschaltet werden, um die elektrische Energieaufnahme des Sensors im Rahmen des angegebenen Verfahrens zu verringern. Dies stellt aber nur eine Möglichkeit dar, wie die elektrische Energieaufnahme des Sensors reduziert werden kann. Eine weitere Möglichkeit wäre beispielsweise eine Komponente des Sensors zur Fehlerüberwachung abzuschalten, wenn bei einem erkannten Fehler keine weitere Fehlerüberwachung als notwendig erachtet wird.

Wenn jedoch die Versendung der Messpulse im Fehlerfall unterdrückt wird, dann kann in einer bevorzugten Weiterbildung des angegebenen Verfahrens, vor jedem Versenden eines Messpulses im Fehlerfall geprüft werden, ob der zu versendende Fehler noch vorliegt. Zweckmäßigerweise sollte die entsprechende Komponente zur Fehlerüberwachung dann im Fehlerfall eingeschaltet bleiben.

Alternativ oder zusätzlich kann in einer weiteren Weiterbildung des angegebenen Verfahrens der Sensor nach dem Senden des Fehlers mit dem Fehlerpegel neu aufgestartet werden. Auf diese Weise kann versucht werden durch eine Neuinitialisierung des Sensors den Fehler zu beheben, wobei nach dem Neustart dann der volle Funktionsumfang auch zur Fehlerdiagnose wieder vollumfänglich zur Verfügung steht. Ist der Fehler weiterhin vorhanden und wird durch die Fehlerüberwachung erfasst, dann kann das angegebene Verfahren erneut ausgeführt werden.

In einer noch anderen Weiterbildung umfasst das angegebene Verfahren die Schritte:
- Hinterlegen des Fehlers in einem Speicher vor dem Abschalten der elektrische Energie aufnehmenden Komponente des Sensors, und
- Unterbrechen einer elektrischen Energieversorgung des Speichers zum Abschalten der elektrische Energie aufnehmenden Komponente des Sensors.

In diesem Fall sollte der Speicher zweckmäßigerweise nichtflüchtig ausgeführt sein. Durch das Abschalten des Speichers kann eine weitere elektrische Energieaufnahme reduziert werden, um das angegebene Verfahren wirkungsvoll auszuführen.

Gemäß einem weiteren Aspekt der Erfindung umfasst ein Sensor eine Signalaufbereitungsschaltung zur des Verfahrens. In einer besonderen Weiterbildung ist der angegebene Sensor ein Raddrehzahlsensor.
Gemäß einem weiteren Aspekt der Erfindung umfasst ein Fahrzeug einen der angegebenen Raddrehzahlsensoren.
Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
Fig. 1 eine schematische Ansicht eines Fahrzeuges mit einer Fahrdynamikregelung,
Fig. 2 eine schematische Ansicht eines Raddrehzahlsensors in dem Fahrzeug der Fig. 1, und
Fig. 3 ein Diagramm mit einem Ausgangssignal aus dem Raddrehzahlsensor der Fig. 2 zeigen.

In den Figuren werden gleiche technische Elemente mit gleichen Bezugszeichen versehen und nur einmal beschrieben.

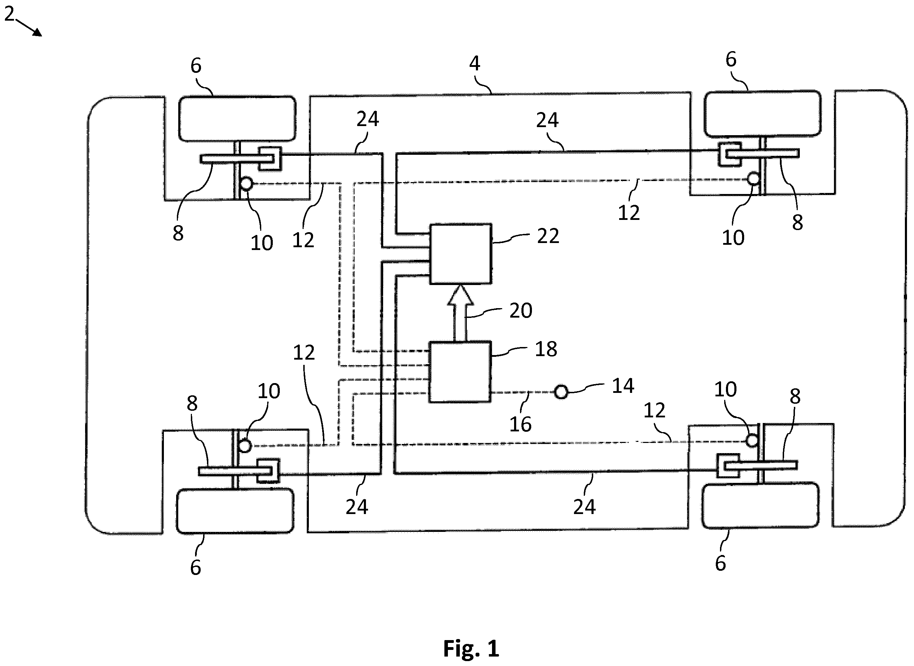

Es wird auf Fig. 1 Bezug genommen, die eine schematische Ansicht eines Fahrzeuges 2 mit einer an sich bekannten Fahrdynamikregelung zeigt. Details zu dieser Fahrdynamikregelung können beispielsweise der DE 10 2011 080 789 A1 entnommen werden.

Das Fahrzeug 2 umfasst ein Chassis 4 und vier Räder 6. Jedes Rad 6 kann über eine ortsfest am Chassis 4 befestigte Bremse 8 gegenüber dem Chassis 4 verlangsamt werden, um eine Bewegung des Fahrzeuges 2 auf einer nicht weiter dargestellten Straße zu verlangsamen.

Dabei kann es in einer dem Fachmann bekannten Weise passieren, dass die Räder 6 des Fahrzeuges 2 ihre Bodenhaftung verlieren und sich das Fahrzeug 2 sogar von einer, beispielsweise über ein nicht weiter gezeigtes Lenkrad vorgegebenen Trajektorie durch Untersteuern oder Übersteuern wegbewegt. Dies wird durch an sich bekannte Regelkreise wie ABS (Antiblockiersystem) und ESP (elektronisches Stabilitätsprogramm) vermieden.

In der vorliegenden Ausführung weist das Fahrzeug 2 dafür Drehzahlsensoren 10 an den Rädern 6 auf, die eine Drehzahl 12 der Räder 6 erfassen. Ferner weist das Fahrzeug 2 einen Inertialsensor 14 auf, der Fahrdynamikdaten 16 des Fahrzeuges 2 erfasst, die beispielsweise eine Nickrate, eine Wankrate, eine Gierrate, eine Querbeschleunigung, eine Längsbeschleunigung und/oder eine Vertikalbeschleunigung in einer dem Fachmann an sich bekannten Weise umfassen können.

Basierend auf den erfassten Drehzahlen 12 und Fahrdynamikdaten 16 kann eine Auswertevorrichtung in Form eines Reglers 18 in einer dem Fachmann bekannten Weise bestimmen, ob das Fahrzeug 2 auf der Fahrbahn rutscht oder sogar von der oben genannten vorgegebenen Trajektorie abweicht und entsprechend mit einem an sich bekannten Reglerausgangssignal 20 darauf reagieren. Das Reglerausgangssignal 20 kann dann von einer Stelleinrichtung 22 verwendet werden, um mittels Stellsignalen 24 Stellglieder, wie die Bremsen 8 anzusteuern, die auf das Rutschen und die Abweichung von der vorgegebenen Trajektorie in an sich bekannter Weise reagieren.

Anhand einer der in Fig. 1 gezeigten Drehzahlsensoren 10 soll die vorliegende Erfindung näher verdeutlicht werden, auch wenn die vorliegende Erfindung an beliebigen Sensoren, wie beispielsweise dem Inertialsensor 14 umsetzbar ist.

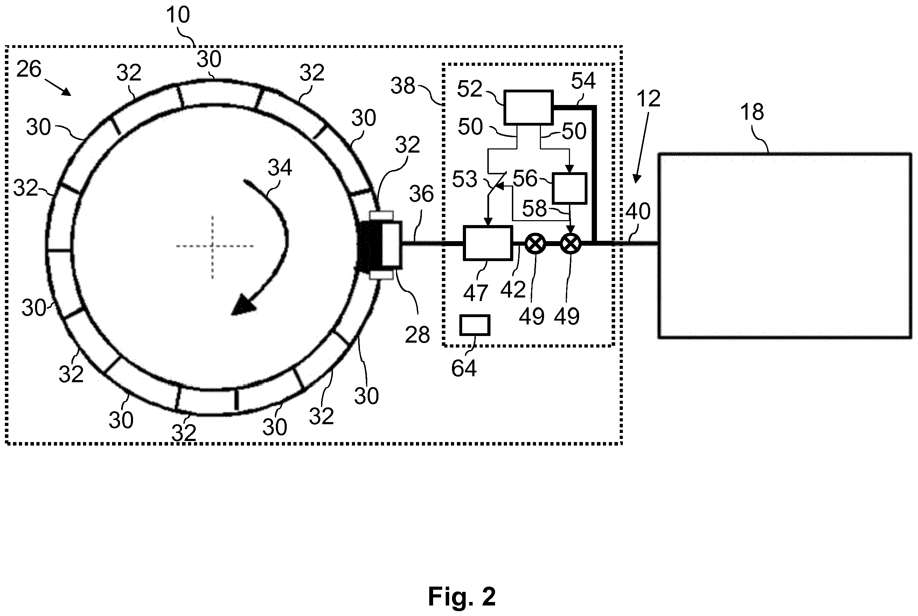

Es wird auf Fig. 2 Bezug genommen, die eine schematische Ansicht einer der Drehzahlsensoren 10 in der Fahrdynamikregelung der Fig. 1 zeigt.

Der Drehzahlsensor 10 ist in der vorliegenden Ausführung als aktiver Drehzahlsensor ausgeführt, der eine drehfest am Rad 6 befestigte Encodersscheibe 26 und einen ortsfest zum Chassis 4 befestigen Lesekopf 28 umfasst.

Die Encoderscheibe 26 besteht in der vorliegenden Ausführung aus aneinandergereihten Magnetnordpolen 30 und Magnetsüdpolen 32, die gemeinsam ein nicht weiter dargestelltes Gebermagnetfeld erregen. Dreht sich die am Rad 6 befestigte Encoderscheibe 26 mit diesem in eine Drehrichtung 34, dreht sich das Gebermagnetfeld entsprechend synchron mit.

Der Lesekopf 28 ist in der vorliegenden Ausführung ein magnetostriktives Element, das in Abhängigkeit der Winkellage des vom Encoderrad 26 erregten Gebermagnetfeldes seinen elektrischen Widerstand ändert.

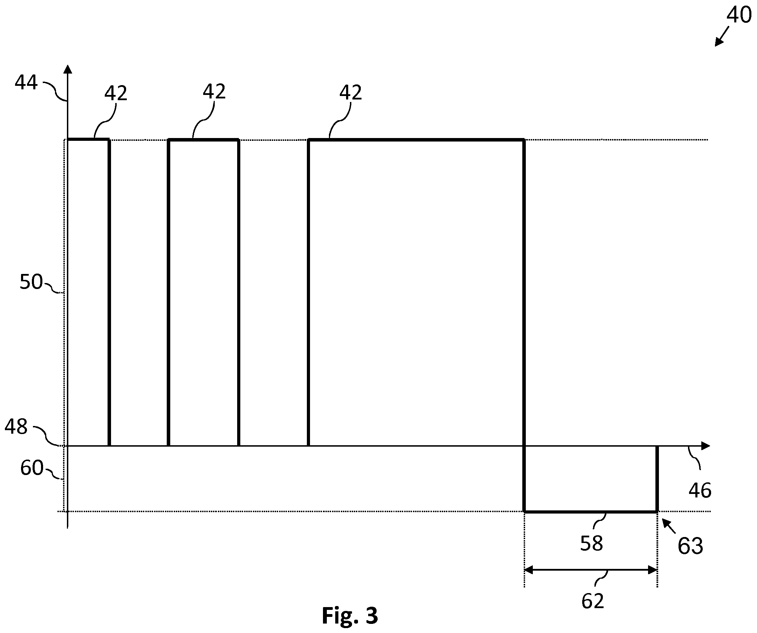

Zur Erfassung der Drehzahl 12 wird die Änderung der Winkellage des Encoderrades 26 und damit die Änderung des elektrischen Widerstandes des Lesekopfes 28 erfasst. Dazu kann der Lesekopf 28 in an sich bekannter Weise an eine nicht weiter dargestellte Widerstandsmessschaltung, wie beispielsweise eine an sich bekannte Brückenschaltung angeschlossen werden. In Abhängigkeit des elektrischen Widerstandes des Lesekopfes 28 wird in der Widerstandsmessschaltung ein periodisches Ausgangssignal, nachstehend Drehzahlgebersignal 36 genannt, erzeugt. Basierend auf dem Drehzahlgebersignal 36 kann in einer dem Lesekopf 28 nachgelagerten Signalaufbereitungsschaltung 38 ein von der Drehzahl 12 abhängiges und in Fig. 3 gezeigtes Pulssignal 40 erzeugt und an den Regler 18 ausgegeben werden. Hierzu und zu weiteren Hintergrundinformationen zu aktiven Raddrehzahlsensoren wird auf den einschlägigen Stand der Technik, wie beispielsweise die DE 101 46 949 A1 verwiesen.

Der Erzeugung des Pulssignals 40 in der Signalaufbereitungsschaltung 38 soll nachstehend kurz zusätzlich anhand von Fig. 3 erläutert werden, in dem das Pulssignal 40 mit Messpulsen 42 in einem Signal 44 - Zeit 46 - Diagramm aufgetragen ist. Das Signal 44 und damit das Pulssignal 40 kann dabei ein Stromsignal sein. Die Frequenzmodulation an sich ist bereits durch das Messverfahren in dem oben genannten Drehzahlsensor 10 gegeben, wobei die Messpulse 42 in einer Pulserzeugungseinrichtung 47 der Signalaufbereitungsschaltung 38 generiert und über einen Mischer 49 auf das Pulssignal 40 aufmoduliert werden können.

Die Messpulse 42 besitzen ausgehend von einem bestimmten Referenzsignalwert 48 eine vorbestimmte erste Höhe 50. Im Rahmen der Frequenzmodulation bestimmt sich die Anzahl der Messpulse 42 über die Zeit 46 nach dem zu übertragenden Messwert für die Drehzahl 12, was heißt, dass die Anzahl der Messpulse 42 mit steigender Drehzahl 12 zunimmt. In Fig. 3 ist daher das Pulssignal 40 in einem Zustand gezeigt, in dem die Drehzahl 12 über die Zeit 46 sinkt und die Anzahl der Messpulse 42 über einen bestimmten Zeitraum abnehmen.

Die zur Erzeugung der Messpulse 42 notwendige elektrische Energie 50 wird im Rahmen der vorliegenden Ausführung von einer elektrischen Energieversorgungsschaltung 52 über einen noch zu beschreibenden Schalter in Form eines Öffners 53 bereitgestellt. Die elektrische Energieversorgungsschaltung 52 entnimmt die hierzu notwendige Eingangsenergie 54 aus dem Pulssignal 40, wobei die notwendige Eingangsenergie 54 in an sich bekannter Weise vom Regler 18 in das Pulssignal 40 beispielsweise im Rahmen eines Offsetstromes eingespeist wird.

Die Signalaufbereitungsschaltung 38 besitzt ferner eine Fehlerüberwachungseinrichtung 56. Aufgabe dieser Fehlerüberwachungseinrichtung 56 ist es Fehlfunktionen zu erkennen und dem Regler 18 zu melden, damit dieser entsprechend darauf reagieren kann. Mit den Messpulsen 42 eines fehlerhaften Drehzahlsensors 10 könnte der Regler 18 in der anhand der Fig. 1 beschriebenen Fahrdynamikregelung beispielsweise fehlerhaft eine nicht vorhandene Gierrate interpretieren, mit der sich das Fahrzeug 2 um seine Hochachse dreht. Dann würde der Regler 18 über das Reglerausgangssignal 20 eingreifen und dem Fahrzeug 2 ein Gierverhalten aufzwingen, um der nicht vorhandenen Gierrate entgegenzuwirken. Da das in hohem Maße verkehrsgefährdend ist, sollen fehlerhafte Drehzahlsensoren 10 erkannt werden, wofür jeweils die Fehlerüberwachungseinrichtung 56 vorhanden ist.

Auch die Fehlerüberwachungseinrichtung 56 wird mit elektrischer Energie aus der elektrischen Energieversorgungsschaltung 52 betrieben. Die Fehlerüberwachungseinrichtung 56 kann beispielsweise als an sich bekannter Watchdog ausgeführt sein, analysiert die Funktion des Drehzahlsensors 10 und überwacht diesen auf Fehler hin. Tritt ein Fehler auf, dann gibt die Fehlerüberwachungseinrichtung 56 einen Fehlerpuls 58 aus, der über einen Mischer 49 ebenfalls auf das Pulssignal 40 aufmoduliert werden kann.

Damit der Regler 18 den Fehlerpuls 58 auch als solchen identifizieren kann, muss für diesen eine Fehlerpulshöhe 60 gewählt werden, die von der Höhe der Messpulse 42 verschieden ist. Für eine gute Erkennbarkeit durch den Regler 18, soll der Fehlerpuls 58 unterhalb des Referenzsignalwertes 48 fallen und dort für eine vorbestimmte Dauer 62 gehalten werden. Diese Dauer 62 kann prinzipiell beliebig gehalten werden. Sie sollte jedoch so lange dauern, dass der Regler 18 den Fehlerpuls 58 auch eindeutig von zufälligen Signalwertschwankungen unterscheiden kann.

Problematisch hierbei ist, dass der Fehlerpuls 58 mit seiner Fehlerpulshöhe 60 die Eingangsenergie 54 herabsetzt. Zweckmäßigerweise ist der Referenzsignalwert 48 als Minimalsignalwert oder Mindestpegel derart gewählt, dass eine dauerhafte elektrische Energieversorgung aller Komponenten des Drehzahlsensors 10 und insbesondere der Signalverarbeitungsschaltung 38 sichergestellt ist. Fällt das Pulssignal 40 wie beim Fehlerpuls 58 dauerhaft unterhalb den Referenzsignalwert 48, dann kann die elektrische Energieversorgung des Drehzahlsensors 10 und insbesondere der Signalverarbeitungsschaltung 38 zusammenbrechen.

Da im Fehlerfall der messtechnische Nutzen der Messpulse 42 fraglich ist, wird im Rahmen der vorliegenden Ausführung vorgeschlagen, die elektrische Energieaufnahme des Drehzahlsensors 10 und insbesondere der Signalverarbeitungsschaltung 38 zu senken. Hierzu wird der Öffner 53 beispielsweise mit dem Fehlerpuls 58 angesteuert. Alternativ kann die Fehlerüberwachungseinrichtung 56 den Öffner 53 aber auch mit einem eigenen Signal ansteuern. Auf diese Weise wird die elektrische Energieversorgung 50 der Pulserzeugungseinrichtung 47 unterbrochen und die Erzeugung der Messpulse 42 gestoppt. In der Folge sinkt die elektrische Energieaufnahme des Drehzahlsensors 10 und seine Funktion ist trotz unterhalb des Referenzsignalwertes 48 abgefallenen Pulssignals 40 durch den Fehlerpuls 58 weiterhin sichergestellt.

Basierend auf dem Fehlerpuls 58 kann dann am Ende der Dauer 62 auch ein Neustart 63 des Drehzahlsensors 10 initiiert werden, um zu versuchen, den Fehler zu beheben. Mit dem Neustart 63 könnte die Dauer 62 für das Senden des Fehlerpulses 58 automatisch beendet werden. Alternativ oder zusätzlich kann der Fehler auch in einem in Fig. 2 nur angedeuteten Speicher 64 hinterlegt werden.

## Patentansprüche

1. Verfahren zum Senden einer einen Fehler in einem Sensor (10) beschreibenden Fehlerinformation (58) in einem zwischen dem Sensor (10) und einer übergeordneten Empfangseinrichtung (18) ausgetauschten Signal (40), das mit einem Mindestpegel (48) zur elektrischen Energieversorgung (54) des Sensors (10) sowie zum Tragen von Messinformationen (42) eingerichtet ist, umfassend:
- Erkennen (56) des zu versendenden Fehlers im Sensor (10), **gekennzeichnet durch**
- Abschalten (53) einer elektrische Energie (50) aufnehmenden Komponente (47) des Sensors (10), und
- Senden der Fehlerinformation (58) mit einem Fehlerpegel (60) unterhalb des Mindestpegels (48).

2. Verfahren nach Anspruch 1, wobei die Fehlerinformation (58) in einem Puls gesendet wird, der über eine vorbestimmte zeitliche Länge (62) auf dem Fehlerpegel (60) gehalten wird.

3. Verfahren nach Anspruch 1 oder 2, wobei die Messinformation (42) in dem Signal (40) mit Messpulsen zwischen dem Mindestpegel (48) und einem zweiten oberhalb des Mindestpegels (48) liegenden Messpulspegel (50) beschrieben wird.

4. Verfahren nach Anspruch 3, umfassend:
- Unterdrücken des Sendens eines Messpulses, wenn der zu versendende Fehler im Sensor erkannt wurde.

5. Verfahren nach Anspruch 4, wobei, wenn ein zu versendender Fehler erkannt wurde, vor jedem Versenden eines Messpulses geprüft wird, ob der zu versendende Fehler noch vorliegt.

6. Verfahren nach einem der vorstehenden Ansprüche, umfassend:
- Neustarten (63) des Sensors (10) nach dem Senden der Fehlerinformation (58) mit dem Fehlerpegel (60).

7. Verfahren nach einem der vorstehenden Ansprüche, umfassend:
- Hinterlegen der Fehlerinformation (58) in einem Speicher (64) vor dem Abschalten der elektrische Energie (50) aufnehmenden Komponente (47) des Sensors (10), wobei das Abschalten der elektrische Energie (50) aufnehmenden Komponente (47) des Sensors eine Unterbrechung einer elektrischen Energieversorgung (50) des Speichers (64) umfasst.

8. Verfahren nach einem der vorstehenden Ansprüche, wobei die elektrische Energie (50) aufnehmende Komponente (47) des Sensors (10) Teile einer Signalverarbeitungsschaltung (38) zum Eintragen (49) der Messinformationen (42) in das Signal (40) umfasst.

9. Sensor (10) mit einer Signalaufbereitungsschaltung (38) zur Durchführung eines Verfahrens nach einem der vorstehenden Ansprüche, wobei die Signalaufbereitungsschaltung (38) umfasst:
- eine elektrische Energieversorgungsschaltung (52) zur Entnahme einer Eingangsenergie (54) aus einem mit einer übergeordneten Empfangseinrichtung (18) ausgetauschten Signal (40), wobei das Signal (40) mit einem Mindestpegel (48) zur elektrischen Energieversorgung (54) des Sensors (10) sowie zum Tragen von Messinformationen (42) eingerichtet ist;
- eine Fehlerüberwachungseinrichtung (56) zum Erkennen eines Sensorfehlers und zum Senden einer Fehlerinformation (58) zu der Empfangseinrichtung (18);
**dadurch gekennzeichnet, dass**
die Signalaufbereitungsschaltung (52) einen Schalter (53) umfasst,
der eine elektrische Energie (50) aufnehmende Komponente (47) des Sensors abschalten kann; und dass die Fehlerinformation (58) mit einem Fehlerpegel (60) unterhalb des Mindestpegels (48) gesendet wird.

## Claims

1. Method for transmitting an item of error information (58) describing an error in a sensor (10) in a signal (40), which is interchanged between the sensor (10) and a superordinate receiving device (18) and is set up with a minimum level (48) for supplying (54) electrical energy to the sensor (10) and for carrying measurement information (42), comprising:
- detecting (56) the error to be transmitted in the sensor (10),
**characterized by**
- switching off (53) a component (47) of the sensor (10) which consumes electrical energy (50), and
- transmitting the error information (58) with an error level (60) below the minimum level (48).

2. Method according to Claim 1, the error information (58) being transmitted in a pulse which is kept at the error level (60) over a predetermined length (62) of time.

3. Method according to Claim 1 or 2, the measurement information (42) in the signal (40) being described with measurement pulses between the minimum level (48) and a second, measurement pulse level (50) above the minimum level (48).

4. Method according to Claim 3, comprising:
- suppressing the transmission of a measurement pulse if the error to be transmitted has been detected in the sensor.

5. Method according to Claim 4, a check being carried out, if an error to be transmitted has been detected, in order to determine whether the error to be transmitted is still present before each transmission of a measurement pulse.

6. Method according to one of the preceding claims, comprising:
- restarting (63) the sensor (10) after the error information (58) has been transmitted with the error level (60).

7. Method according to one of the preceding claims, comprising:
- storing the error information (58) in a memory (64) before that component (47) of the sensor (10) which consumes electrical energy (50) is switched off, the operation of switching off that component (47) of the sensor which consumes electrical energy (50) comprising interrupting an electrical energy supply (50) for the memory (64).

8. Method according to one of the preceding claims, that component (47) of the sensor (10) which consumes electrical energy (50) comprising parts of a signal processing circuit (38) for entering (49) the measurement information (42) in the signal (40).

9. Sensor (10) having a signal conditioning circuit (38) for carrying out a method according to one of the preceding claims, the signal conditioning circuit (38) comprising:
- an electrical energy supply circuit (52) for taking input energy (54) from a signal (40) interchanged with a superordinate receiving device (18), the signal (40) being set up with a minimum level (48) for supplying (54) electrical energy to the sensor (10) and for carrying measurement information (42);
- an error monitoring device (56) for detecting a sensor error and for transmitting an item of error information (58) to the receiving device (18);
**characterized in that**
the signal conditioning circuit (52) comprises a switch (53) which can disconnect a component (47) of the sensor which consumes electrical energy (50); and **in that** the error information (58) is transmitted with an error level (60) below the minimum level (48).

## Revendications

1. Procédé permettant de transmettre une information d'erreur (58) décrivant une erreur affectant un capteur (10) dans un signal (40) qui est échangé entre le capteur (10) et un dispositif de réception supérieur (18), qui est conçu de manière à présenter un niveau minimum (48) pour l'alimentation en énergie électrique (54) du capteur (10) et pour transporter des informations de mesure (42), consistant à :
- détecter (56) l'erreur à transmettre affectant le capteur (10),
caractérisé le fait de
- désactiver (53) un composant (47) récepteur d'énergie électrique (50) du capteur (10), et
- transmettre l'information d'erreur (58) présentant un niveau d'erreur (60) inférieur au niveau minimum (48).

2. Procédé selon la revendication 1, dans lequel l'information d'erreur (58) est transmise sous la forme d'une impulsion maintenue au niveau d'erreur (60) pendant une durée prédéterminée (62).

3. Procédé selon la revendication 1 ou 2, dans lequel l'information de mesure (42) est décrite dans le signal (40) par des impulsions de mesure comprises entre le niveau minimum (48) et un second niveau d'impulsion de mesure (50) se situant au-dessus du niveau minimum (48) .

4. Procédé selon la revendication 3, consistant à :
- supprimer la transmission d'une impulsion de mesure si l'erreur à transmettre affectant le capteur a été détectée.

5. Procédé selon la revendication 4, dans lequel, si une erreur à transmettre a été détectée, il est vérifié avant chaque transmission d'une impulsion de mesure si l'erreur à transmettre est encore présente.

6. Procédé selon l'une des revendications précédentes, consistant à :
- redémarrer (63) le capteur (10) après que l'information d'erreur (58) présentant le niveau d'erreur (60) a été transmise.

7. Procédé selon l'une des revendications précédentes, consistant à :
- stocker l'information d'erreur (58) dans une mémoire (64) avant que le composant (47) récepteur d'énergie électrique (50) du capteur (10) soit désactivé, dans lequel la désactivation du composant récepteur d'énergie électrique (50) du capteur (47) consiste à interrompre une alimentation en énergie électrique (50) de la mémoire (64).

8. Procédé selon l'une des revendications précédentes, dans lequel le composant (47) récepteur d'énergie électrique (50) du capteur (10) comprend des parties d'un circuit de traitement du signal (38) destiné à introduire (49) l'information de mesure (42) dans le signal (40).

9. Capteur (10) comportant un circuit de conditionnement du signal (38) destiné à mettre en oeuvre un procédé selon l'une des revendications précédentes, dans lequel le circuit de conditionnement du signal (38) comprend :
- un circuit d'alimentation en énergie électrique (52) destiné à prélever une énergie d'entrée (54) à partir d'un signal (40) échangé avec un dispositif de réception supérieur (18), dans lequel le signal (40) est conçu de manière à présenter un niveau minimum (48) pour l'alimentation en énergie électrique (54) du capteur (10) et pour transporter des informations de mesure (42) ;
- un moyen de surveillance d'erreur (56) destiné à détecter une erreur du capteur et à transmettre une information d'erreur (58) au dispositif de réception (18) ;
**caractérisé en ce que** le circuit de conditionnement du signal (52) comprend un commutateur (53) qui peut désactiver un composant (47) récepteur d'énergie électrique (50) du capteur ; et **en ce que** l'information d'erreur (58) présentant un niveau d'erreur (60) inférieur au niveau minimum (48) est transmise.
